# DEMANDE DE BREVET EUROPEEN

(11) **EP 3 663 834 A1**
(43) Date de publication de la demande: **10.06.2020**
(21) Numéro de dépôt: 18209751.9
(22) Date de dépôt: 03.12.2018
(51) Int. Cl.: G02B 27/01, B60K 35/00, B60K 37/02, G02F 1/1333, G03B 21/16, H04N 9/31, G02B 7/00

(54) **AFFICHEUR TÊTE HAUTE POUR VÉHICULE AUTOMOBILE COMPRENANT UN RADIATEUR POUR REFROIDIR UN ÉCRAN RÉTROÉCLAIRÉ**

(71) Demandeur: Valeo Comfort and Driving Assistance, 94046 Créteil Cedex (FR)
(72) Inventeur: DELPIERRE, Laurent, 94046 Créteil cedex (FR); SAUZAY, Laurent, 94046 Créteil cedex (FR); LE TOUMELIN, Loic, 74321 Bietigheim-Bissingen (DE)
(74) Mandataire: Delplanque, Arnaud

(57) **Abrégé**

L'invention concerne un afficheur (2) tête haute pour véhicule automobile, comprenant un radiateur (26) pour refroidir un écran rétroéclairé (10).

Un afficheur (2) tête haute selon l'invention, comprend un écran rétroéclairé (12) comportant un cadre (121) entourant une matrice (122) constituée d'éléments dont la transmittance varie de façon contrôlée dans le temps, et un conduit optique agencé en vis-à-vis de la matrice (122)

L'afficheur est remarquable en ce qu'il comprend un radiateur (26) interposé entre le cadre (121) et le conduit optique, comprenant une fenêtre (30) permettant le passage d'un faisceau lumineux entre la matrice et le conduit optique, le radiateur (26) au moins une extrémité (36) s'étendant à l'extérieur du conduit optique de manière à favoriser la dissipation de la chaleur thermique du cadre (121) à l'extérieur du conduit optique.

## Description

### DOMAINE TECHNIQUE AUQUEL SE RAPPORTE L'INVENTION

La présente invention concerne un afficheur tête haute pour véhicule automobile.

### ARRIERE-PLAN TECHNOLOGIQUE

Pour le conducteur d'un véhicule automobile, il est particulièrement confortable de pouvoir visualiser des informations supplémentaires, relatives au fonctionnement du véhicule, à l'état du trafic, ou autres, sans avoir pour cela à détourner son regard de la route.

Il est connu dans ce but d'équiper un véhicule automobile avec un afficheur dit tête haute. Un tel afficheur utilise une réflexion partielle sur un élément situé devant le conducteur, par exemple une lame partiellement réfléchissante disposée entre le parebrise du véhicule et les yeux du conducteur, pour générer une image virtuelle comportant les informations à afficher dans l'environnement faisant face au véhicule.

Un afficheur tête haute comprend pour cela une source de lumière rétroéclairant un écran partiellement transparent, de manière à cacher une partie de la lumière l'éclairant, tout en laissant passer une autre partie de la lumière afin de former un faisceau lumineux projeté sur la lame partiellement réfléchissante.

L'afficheur tête-haute comprend également un conduit optique amont interposé entre la source de lumière et l'écran rétroéclairé, et un conduit optique aval interposé entre l'écran rétroéclairé et la lame partiellement réfléchissante. Les conduits optiques amont et aval permettent de s'assurer qu'aucune ombre parasite ne se forme sur l'image virtuelle due à la présence d'un objet non désiré dans le faisceau lumineux émis par la source de lumière. Autrement dit, les conduits optiques forment une gaine de protection entourant le faisceau lumineux émis par la source de lumière, en s'étendant de la source de lumière vers la lame partiellement réfléchissante.

L'absorption d'une partie de la lumière par l'écran rétroéclairé entraine son échauffement thermique. Cette chaleur thermique se trouve alors être confinée par le conduit optique, au niveau de sa face avant et de sa face arrière, entrainant plus ou moins rapidement son échauffement thermique. Au-delà d'une température dite critique, le fonctionnement de l'écran rétroéclairé est altéré ou pire l'écran rétroéclairé peut être endommagé.

Il est donc apparu nécessaire de trouver une solution prévenant d'un échauffement excessif de l'écran, au-delà de sa température critique, afin de préserver ses fonctionnalités dans le temps, tout en préservant le confinement du conduit optique.

### OBJET DE L'INVENTION

Dans ce contexte, la présente invention propose un afficheur tête haute pour véhicule automobile, comprenant un écran rétroéclairé comportant un cadre entourant une matrice constituée d'éléments dont la transmittance varie de façon contrôlée dans le temps, de manière à former une image virtuelle lorsque la matrice est éclairée par une source de lumière, et un conduit optique agencé en vis-à-vis de la matrice.

L'invention est remarquable en ce que l'afficheur comprend un radiateur interposé entre le cadre et le conduit optique, le radiateur définissant une fenêtre permettant le passage d'un faisceau lumineux entre la matrice et le conduit optique, le radiateur comportant au moins une extrémité s'étendant à l'extérieur du conduit optique de manière à favoriser la dissipation de la chaleur thermique du cadre à l'extérieur du conduit optique.

La présence du radiateur permet ainsi de réduire significativement la quantité de chaleur thermique diffusée par l'écran rétroéclairé, dans un conduit optique agencé en vis-à-vis de l'écran rétroéclairé. De ce fait, le radiateur selon l'invention permet de prévenir un échauffement excessif de l'écran rétroéclairé, tout en permettant l'utilisation d'un conduit optique tel que décrit ci-dessus.

D'autres caractéristiques non limitatives et avantageuses du dispositif conforme à l'invention sont les suivantes :
- au moins une extrémité du radiateur s'étend à l'extérieur et le long du conduit optique ;
- au moins une extrémité du radiateur s'étend à l'extérieur et le long de l'écran rétroéclairé ;
- au moins une extrémité du radiateur s'étend à l'extérieur du conduit optique et dans une direction sensiblement normale à une face avant de la matrice destinée à être éclairée par une source de lumière ;
- au moins deux extrémités du radiateur s'étendent à l'extérieur du conduit optique de façon symétrique par rapport au cadre ;
- au moins une extrémité du radiateur comprend plusieurs ailettes de dissipation thermique ;
- le radiateur présente une conductivité thermique égale ou supérieure au cadre ;
- le radiateur est maintenu au cadre par l'intermédiaire de moyens de maintien réversibles ;
- le radiateur est en contact direct avec le cadre ;
- la fenêtre du radiateur est délimitée par le pourtour du cadre ;
- le radiateur est de type passif ;
- l'extrémité et le radiateur sont réalisés d'une pièce.

Bien entendu, les différentes caractéristiques, variantes et formes de réalisation mentionnées ci-dessus peuvent être associées les unes avec les autres selon diverses combinaisons, dans la mesure où elles ne sont pas incompatibles ou exclusives les unes des autres.

### DESCRIPTION DES FIGURES

La description qui va suivre en regard des dessins annexés, donnés à titre d'exemples non limitatifs, fera bien comprendre en quoi consiste l'invention et comment elle peut être réalisée. Sur les dessins annexés :
- la figure 1 illustre une représentation schématique d'un afficheur tête haute d'un véhicule automobile selon l'invention ;
- les figures 2 et 3 illustrent respectivement des vues en perspective d'une face arrière et d'une face avant d'un radiateur selon l'invention représenté à la figure 1 ;
- la figure 4 illustre une vue en perspective d'une partie d'un afficheur tête haute, comprenant un radiateur selon l'invention représenté à la figure 1 ;
- la figure 5 illustre une vue de dessus d'une partie d'un afficheur tête haute, comprenant un radiateur selon l'invention représenté à la figure 1 ; et
- la figure 6 représente un afficheur tête haute selon une variante de mise en oeuvre de l'invention.

### DESCRIPTION DETAILLEE D'UN EXEMPLE DE REALISATION

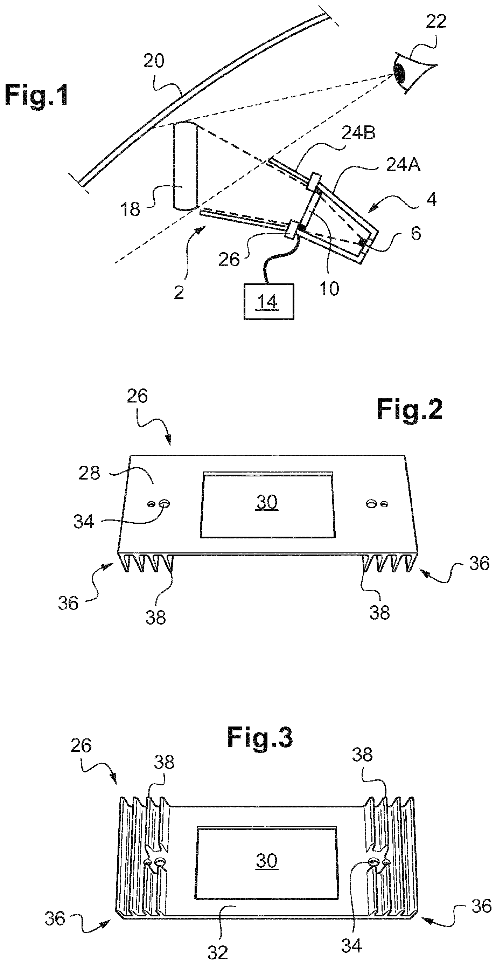

La figure 1 représente schématiquement les composants principaux d'un afficheur 2 tête haute selon l'invention équipant un véhicule automobile. Un tel afficheur 2 comporte une unité de génération d'image 4 comprenant un conduit optique 24A interposé entre un écran rétroéclairé 10 et une source de lumière 6 rétroéclairant ledit écran.

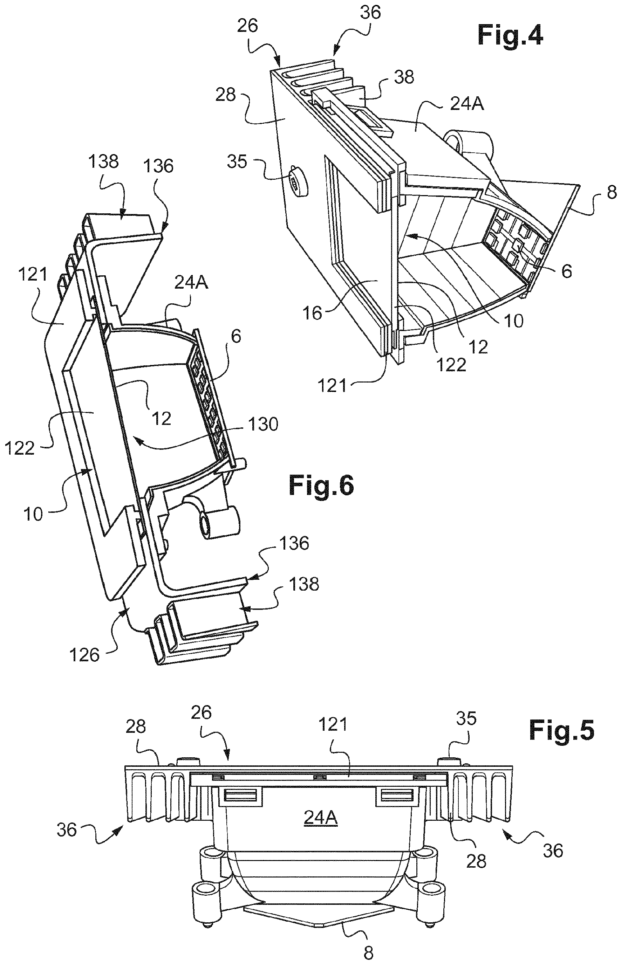

Comme illustré par la figure 4, la source de lumière 6 est montée sur une plaque-support de circuit imprimé 8 de sorte à éclairer une face avant 12 de l'écran rétroéclairé 10. Il est à noter que selon le présent exemple, les termes « face avant » et « face arrière » désignent respectivement la face la plus proche ou la plus éloignée d'un même objet, par rapport à la source de lumière 6.

L'écran rétroéclairé 10 comporte un cadre 121 entourant une matrice 122 constituée d'éléments dont la transmittance varie de façon contrôlée au cours du temps. Plus précisément, la matrice 122 est formée de cellules de cristaux liquides. L'opacité de chaque cellule est contrôlée par l'intermédiaire d'un module de commande 14 illustré sur la figure 1, modifiant localement et temporairement la transmittance de l'écran rétroéclairé 10 afin de générer un faisceau lumineux correspondant à au moins une information à afficher sous la forme d'une image pixélisée. Ce faisceau lumineux est ainsi transmis en sortie d'une face arrière 16 de l'écran rétroéclairé 10.

L'image virtuelle est générée pour le conducteur du véhicule automobile par réflexion du faisceau lumineux précité sur une lame 18 partiellement réfléchissante, également dénommée « combineur », placée dans son champ de vision comme illustré par la figure 1. On peut ainsi afficher des informations dans le champ de vision du conducteur sans que celui-ci n'ait à détourner le regard de la route suivie par le véhicule. La lame 18 partiellement réfléchissante utilisée à cette fin est ici distincte du pare-brise 20 du véhicule automobile, et disposée de préférence entre le pare-brise 20 du véhicule et les yeux 22 du conducteur. En variante toutefois, le pare-brise du véhicule pourrait assurer la fonction de la lame partiellement réfléchissante.

L'afficheur 2 comprend également un conduit optique 24B aval interposé entre l'écran rétroéclairé 12 et la lame 18. Les termes « amont » et « aval » font référence au sens de propagation de la lumière émise par la source de lumière 6. La face interne du conduit optique est configurée pour réfléchir la lumière émise par la source de lumière 6. Les conduits optiques amont et aval sont positionnés de manière à s'assurer qu'aucun rayon lumineux parasite ne se forme sur l'image virtuelle due à la présence d'un objet non désiré dans le faisceau de lumière émis par la source de lumière 6. Autrement dit, les conduits optiques 24A, 24B forme une gaine de protection entourant le faisceau lumineux émis par la source de lumière 6. La lumière non transmise par la matrice 122 génère de la chaleur au niveau de la face avant 12 et de la face arrière 16 de l'écran rétroéclairé 10. Cette chaleur est confinée par les conduits optiques 24A, 24B au niveau desdites faces, ce qui entraine plus ou moins rapidement l'échauffement thermique de l'écran rétroéclairé 10. Au-delà d'une température dite critique, le fonctionnement de l'écran rétroéclairé est altéré ou pire endommagé.

L'invention résout ce problème technique en proposant l'utilisation d'un radiateur 26, de préférence de type passif, interposé entre un conduit optique 24A ; 24B et le cadre 121 de l'écran rétroéclairé 10. Comme illustré aux figures 2 et 3, un radiateur 26 selon l'invention comporte une face arrière 28 de forme sensiblement longitudinale. Il est à noter que l'invention ne se limite pas à cette forme particulière, de sorte que le contour de la face arrière 28 peut délimiter une autre forme, par exemple polygonale ou ovale. La face arrière 28 comporte une fenêtre 30 débouchant sur une face avant 32. Le contour de la fenêtre 30 délimite une forme sensiblement similaire à celle de la face arrière 16 de l'écran rétroéclairé 10.

De préférence, la forme et les dimensions de la fenêtre 30 sont adaptées de sorte à ne pas occulter les cellules de cristaux liquides composant la matrice 122, de la lumière émise par la source de lumière 6. Toutefois, selon un mode de réalisation non représenté, le radiateur peut partiellement se superposer à la matrice 122 de l'écran rétroéclairé 10.

La fenêtre 30 est délimitée par le pourtour du cadre 121 de sorte à recouvrir au moins une partie du cadre 121 tout autour de la matrice 122. Le radiateur 26 comporte également des passages 34 destinés à permettre son maintien contre le cadre 121 par l'intermédiaire de moyen de maintien réversible comme par exemple des vis 35, au niveau de la face avant ou arrière de l'écran rétroéclairé. Selon le présent exemple, la face avant 32 du radiateur 26 est maintenue contre le cadre 121 au niveau de la face arrière 16 de l'écran rétroéclairé 10, afin de favoriser une meilleure dissipation à travers le radiateur 26 de la chaleur thermique accumulée par le cadre 121 (cette dissipation étant d'autant meilleure que la surface de contact entre la face avant 32 du radiateur 26 et le cadre 121 de l'écran 10 est importante).

Pour cela, le radiateur 26 présente une conductivité thermique égale ou supérieure au cadre 121. Le radiateur peut ainsi être réalisé à partir d'un matériau métallique et/ou d'un matériau en polymère(s) conducteur(s) thermique(s). De préférence, le radiateur présente une conductivité thermique égale ou supérieure à 10 W.m⁻¹.K⁻¹.

Comme illustré par la figure 4, les dimensions du radiateur sont choisies de manière à ce que ses extrémités 36 dépassent d'un conduit optique amont 24A et/ou aval 24B. Ainsi, les extrémités 36 permettent avantageusement à la chaleur accumulée par le radiateur 26 de se dissiper à l'extérieur du conduit optique. L'invention permet de ce fait d'éviter l'accumulation de chaleur dans le conduit optique, en particulier au niveau de la face de l'écran rétroéclairé 10 recouverte par ledit conduit, tout en préservant les avantages du conduit optique 24. Cette invention limite ainsi l'élévation en température de l'écran rétroéclairé 10, notamment au-delà de sa température critique.

Afin de favoriser la dissipation de la chaleur thermique à l'extérieur du conduit optique 24B aval illustré à la figure 1, les extrémités 36 du radiateur comportent des ailettes 38 de dissipation thermique. Il est à noter que le conduit optique aval 24B n'est pas représenté sur les figures 4 et 5, afin de faciliter la compréhension de l'invention par le lecteur. Les ailettes s'étendent de la face avant 32 du radiateur selon une direction sensiblement normale à ladite face. Autrement dit, les ailettes 38 s'étendent en direction de l'écran rétroéclairé 10 de manière à ne pas encombrer l'espace autour du conduit optique 24B aval. Cet agencement particulier permet à la chaleur thermique accumulée au niveau des parois du conduit optique aval 24B de mieux se dissiper dans l'environnement.

Le nombre et l'agencement des ailettes 38 sont bien entendu choisis de sorte à optimiser la dissipation de chaleur à l'extérieur du conduit optique 24B aval. Selon le présent exemple, le radiateur 26 comporte au niveau de ses extrémités quatre ailettes parallèles entre elles. Le nombre et l'agencement des ailettes peuvent bien entendu variés en fonction de la nature du radiateur, de l'espace disponible autour de l'afficheur tête haute et de la circulation de l'air ambiant autour du radiateur.

De préférence, le radiateur 26 est agencé de sorte que sa surface présente à l'extérieur du conduit optique s'étend sur une longueur comprise entre 3 mm et 25 mm.

Selon une variante de réalisation représentée sur la figure 6, un radiateur 126 est interposé entre le conduit optique 24A amont et le cadre 121, afin de favoriser une meilleure dissipation à travers le radiateur de la chaleur accumulée dans ledit conduit optique 24A. L'invention permet de ce fait d'éviter l'accumulation de chaleur dans le conduit optique amont 24A, en particulier au niveau de la face avant 12 de l'écran rétroéclairé 10. Ainsi, une élévation en température de l'écran rétroéclairé 10 au-delà de sa température critique est évitée, tout en préservant les avantages liés à l'utilisation d'un conduit optique 24A amont.

Comme dans le précédent mode de réalisation décrit ci-dessus, le radiateur 126 comprend une ouverture définissant une fenêtre 130 qui permet le passage du faisceau lumineux généré par la source de lumière 6.

Le radiateur 126 comporte deux extrémités 136 qui s'étendent à l'extérieur du conduit amont 24A, respectivement de part et d'autre du conduit amont 24A.

Les extrémités 136 du radiateur 126 s'étendent essentiellement perpendiculairement à la partie du radiateur 126 en contact avec l'écran 10. Ces extrémités du radiateur 126 portent par ailleurs des ailettes de refroidissement 128.

Cet agencement particulier permet à la chaleur thermique accumulée au niveau des parois du conduit optique amont 24A de mieux se dissiper dans l'environnement.

Il est à noter que la description ci-dessus ne vise pas à limiter l'invention à ces seuls exemples, de sorte que l'homme du métier peut aisément réaliser d'autres formes de radiateur ou agencement, en se basant sur les enseignements techniques ici décrits.

## Revendications

1. Afficheur (2) tête haute pour véhicule automobile, comprenant un écran rétroéclairé (10) comportant un cadre (121) entourant une matrice (122) constituée d'éléments dont la transmittance varie de façon contrôlée dans le temps, de manière à former une image virtuelle lorsque la matrice est éclairée par une source de lumière (6), et un conduit optique (24A ; 24B) agencé en vis-à-vis de la matrice (122), **caractérisé en ce que** l'afficheur (2) comprend un radiateur (26 ; 126) interposé entre le cadre (121) et le conduit optique (24A ; 24B), le radiateur (26 ; 126) définissant une fenêtre (30 ; 130) permettant le passage d'un faisceau lumineux entre la matrice et le conduit optique, le radiateur (26 ; 126) comportant au moins une extrémité (36 ; 136) s'étendant à l'extérieur du conduit optique (24A ; 24B) de manière à favoriser la dissipation de la chaleur thermique du cadre (121) à l'extérieur du conduit optique (24A ; 24B).

2. Afficheur (2) tête haute selon la revendication précédente, **caractérisé en ce qu'**au moins une extrémité (136) du radiateur (126) s'étend à l'extérieur et le long du conduit optique (24A).

3. Afficheur (2) tête haute selon l'une des revendications précédentes, **caractérisé en ce qu'**au moins une extrémité (36) du radiateur (26) s'étend à l'extérieur et le long de l'écran rétroéclairé (10).

4. Afficheur (2) tête haute selon l'une des revendications précédentes, **caractérisé en ce qu'**au moins une extrémité (136) du radiateur (126) s'étend à l'extérieur du conduit optique (24A) et dans une direction sensiblement normale à une face avant (12) de la matrice destinée à être éclairée par une source de lumière (6).

5. Afficheur (2) tête haute selon l'une des revendications précédentes, **caractérisé en ce qu'**au moins deux extrémités (36 ; 136) du radiateur (26 ; 126) s'étendent à l'extérieur du conduit optique (24A ; 24B) de façon symétrique par rapport au cadre (121).

6. Afficheur (2) tête haute selon l'une des revendications précédentes, **caractérisé en ce qu'**au moins une extrémité (36 ; 136) du radiateur (26 ; 126) comprend plusieurs ailettes (38 ; 138) de dissipation thermique.

7. Afficheur (2) tête haute selon l'une des revendications précédentes, **caractérisé en ce que** le radiateur (26 ; 126) présente une conductivité thermique égale ou supérieure au cadre (121).

8. Afficheur (2) tête haute selon l'une des revendications précédentes, **caractérisé en ce que** le radiateur (26) est maintenu au cadre (121) par l'intermédiaire de moyens de maintien (35) réversibles.

9. Afficheur (2) tête haute selon l'une des revendications précédentes, **caractérisé en ce que** le radiateur (26 ; 126) est en contact direct avec le cadre (121).

10. Afficheur (2) tête haute selon l'une des revendications précédentes, **caractérisé en ce que** la fenêtre (30) du radiateur (26) est délimitée par le pourtour du cadre (121).

11. Afficheur (2) tête haute selon l'une des revendications précédentes, **caractérisé en ce que** le radiateur (26 ; 126) est de type passif.

12. Afficheur (2) tête haute selon l'une des revendications précédentes, **caractérisé en ce que** l'extrémité (36 ; 136) et le radiateur (26 ; 126) sont réalisés d'une pièce.
